Europäisches Patentamt

(19) European Patent Office

Office européen des brevets

(11) Publication number: **0 033 185**
**B1**

(12) **EUROPEAN PATENT SPECIFICATION**

(45) Date of publication of patent specification: **23.05.84**

(51) Int. Cl.³: **G 03 G 15/052, G 03 B 27/54**

(21) Application number: **81300014.8**

(22) Date of filing: **05.01.81**

(54) Method and apparatus for compensating for illumination defects in an optical system.

(30) Priority: **07.01.80 US 110068**
**07.01.80 US 110062**

(43) Date of publication of application:
**05.08.81 Bulletin 81/31**

(45) Publication of the grant of the patent:
**23.05.84 Bulletin 84/21**

(84) Designated Contracting States:
**DE FR GB**

(56) References cited:
**EP-A-0 000 450**
**US-A-3 711 199**

**XEROX DISCLOSURE JOURNAL, vol. 4, no. 4, July/August 1979, Stamford, US, K.W. ALTFATHER et al. "Use of a thin film optical filter to achieve uniform image irradiance" IBM TECHNICAL DISCLOSURE BULLETIN, vol. 14, no. 11, April 192, New York, US, G.W. HOBGOOD Jr. "Illumination compensation for cos4 lens attenuation"**

(73) Proprietor: **XEROX CORPORATION**
**Xerox Square - 020**
**Rochester New York 14644 (US)**

(72) Inventor: **Rees, James D.**
**5880 Palmyra Road**
**Pittsford New York 14450 (US)**
Inventor: **Ozern, Donna U.**
**Shadow Lane**
**Amherst New Hampshire 03031 (US)**
Inventor: **Altfather, Kenneth W., Jr.**
**9 Timway Court**
**Fairport New York 14450 (US)**
Inventor: **Critchlow, James A.**
**225 Mulberry Drive**
**Macedon New York 14502 (US)**
Inventor: **Lama, William L.**
**753 Blue Creek Drive**
**Webster New York 14580 (US)**

(74) Representative: **Weatherald, Keith Baynes et al**
**European Patent Attorney Rank Xerox Limited**
**Patent Department 338 Euston Road**
**London NW1 3BH (GB)**

## Description

This invention relates generally to a full frame copying device and, more particularly to an improved optical system adapted to provide a uniform irradiance at an image plane through a multi-magnification range.

In electrophotographic copiers, the areas of a charged photoconductive surface, which are irradiated by a light image, are discharged, the degree of discharge dependent upon the intensity (irradiance) of the impinging light rays. It is, therefore, desirable that the light ray intensity vary only due to the reflectance characteristics of the original document being copied rather than due to changes introduced by the imaging components. Stated in another manner, the optimum system would be one providing uniform photoconductor irradiance given a uniformly-reflecting document.

Of the factors affecting relative irradiance at an imaging plane, the most significant is the cosine (cos) variation wherein the irradiance at an image plane is proportional to the $\cos^4$ of the angle between the lens axis and the field beam. Thus, even if an object plane is uniformly illuminated, photoconductor irradiance decreases as radial distance from the system optical axis increases. Various approaches have been devised to compensate for this effect. Typically, in slit-scanning systems, a sheet of opaque material having a butterfly slit formed thereon is employed with the irradiance profile. Other slit-scanning systems utilize a variable density filter in the optical path whose transmissiveness varies inversely to the $\cos^4$. Such a device is described in IBM Technical Disclosure, Vol. 14, No. 11 (April 1972). In addition to the $\cos^4$ variation, other circularly symmetrical non-uniformities, such as lens exit pupil distortion, lens transmission and vignetting, affect the relative irradiance at the imaging plane.

In full-frame imaging systems, wherein an entire document is typically illuminated by flash illumination, efforts to compensate for $\cos^4$ light falloff have emphasized locating light sources in such a way that the document edges are illuminated to a greater degree than central areas. Two such systems are disclosed in U.S. patents 3,669,538 (Fowler) and 3,777,135 (Rees). Another solution to $\cos^4$ falloff, using a narrow band filter which passes light in a $\sec^4$ relationship, is proposed in Xerox Disclosure Journal, Vol. 4, No. 4, July/Aug. 79, p. 485. These compensation techniques are fairly effective for relatively small half field angles ($\approx 20°$) but as this field angle increases, the $\cos^4$ fallof becomes steeper and other circularly symmetric non-uniformities within the optical system contribute still further to illumination non-uniformity at the image plane. (Also, the increased edge illumination produced by these systems may not be entirely suitable for corner-registered document systems). These non-uniformities include lens transmission variations and lens exit pupil distortion. The cumulative effect of these non-uniformities, combined with the $\cos^4$ dropoff, result in often severe problems in obtaining uniform exposure at the photoconductor. In addition, if these systems provide a magnification (generally reduction) option, a variation of the field angles (hence, $\cos^4$ variation) occurs with magnification changes, and it has not been possible to maintain the desired image plane illumination through all the reduction positions. This problem is further accentuated in systems in which the document to be copied is edge or corner-registered due to the assymmetrical aspect of the field.

There is therefore required a means to provide uniform imaging of a document in a full frame, multi-magnification copying system by compensating for the effects of $\cos^4$ and other variations through all magnification positions assumed by the projection lens.

This object is accomplished by positioning a variable-density filter at a fixed distance from a projection lens, and moving the lens and filter *en bloc* as specified in the appendant method claim. Apparatus in accordance with this invention is as claimed in the respective appended claims.

The present invention will now be described, by way of example, with reference to the accompanying drawings, in which:

Figure 1 is a view of an optical system for a full frame copier with the relative illumination filter of the present invention located in the optical path;

Figure 2 is a sketch illustrating exit pupil distortion of the lens shown in Figure 1 when the lens is viewed from an extreme angle at the edges of a platen;

Figure 3 is a graph which illustrates the relative illumination falloff at a photoconductive image plane due to the effects of $\cos^4$ alone as compared with $\cos^4$ combined with other system non-uniformities;

Figure 4 is a graph illustrating the transmission profile of the filter of Figure 1;

Figures 5a and 5b are top and cross-sectional views of the filter shown in Figure 1;

Figure 6 is a graph illustrating relative illumination at a photoconductor for a system corrected only for $\cos^4$ as compared to a system using the relative illumination filter of the invention;

Figure 7 is a graph illustrating the relative illumination variation with the filter placed at a design location with respect to the lens as compared to a second optimum location, and

Figure 8 is a schematic view of one embodiment of the lens and filter of Figure 1 at unity magnification and reduction positions.

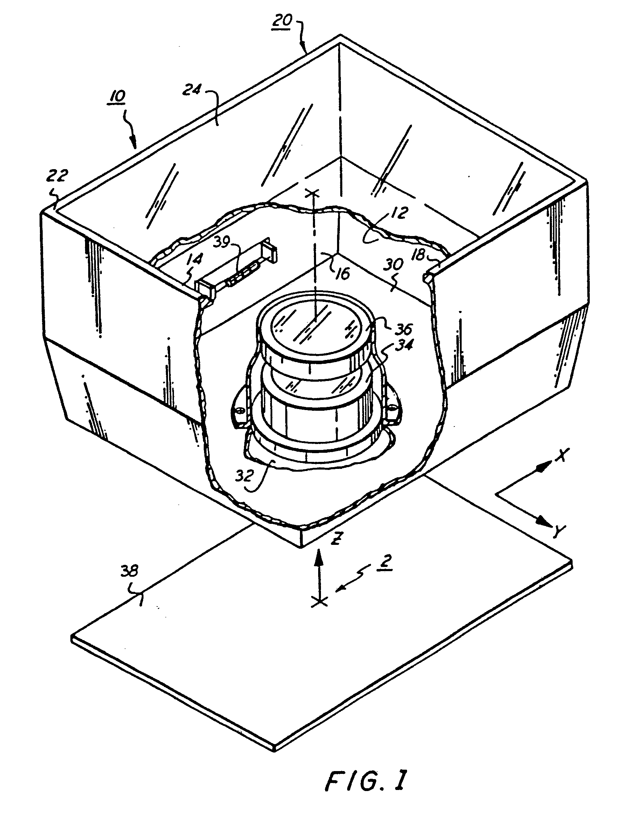

Referring now to Figure 1, there is shown a full frame exposure optical system which utilizes a relative illumination (RI) filter constructed and positioned according to the principles of the present invention.

Generally, a completely-enclosed housing 10 has a first pair of opposing side walls 12, 14 and a second pair of opposing side walls 16, 18. An upper, or top, wall 20 includes a rectangular aperture 22 which, at the center thereof, accommodates a glass platen 24 forming the object plane.

The lower, or bottom, wall 30 has an aperture 32 therein which accommodates lens 34.

Relative illumination (RI) filter 36 is fixedly mounted above lens 34 by a mounting bracket 38 with the center of the filter on lens optical axis Z and XY plane of the filter perpendicular to the axis. Filter 36 is a variable-density filter having a transmission profile that increases with radial displacement from the optical axis as described in greater detail below.

An image plane 38, which may, for example, be a photoconductive sheet to which a charge has been applied, is positioned for exposure to light reflected from a document (not shown) on platen 24, transmitted through filter 36 and projected by lens 34. The optimum spacing between the filter and lens depends upon actual system requirements and can be determined by design techniques known to those skilled in the art. If desired, the filter can be incorporated as part of the lens. The optical system also includes a flash illumination source 39 which may be a periodically pulsed xenon lamp. The interior of the housing 10 is preferentially coated with a substantially diffusely reflecting material. When lamp 39 is flashed, a substantially uniform illumination of the document placed on the platen is obtained. The light reflected by the document passes through filter 36 which attenuates the amount of light passing through in accordance with its transmission profile. The compensated light profile is projected through lens 34 and falls upon plane 38 selectively discharging the sheet and resulting in formation of a latent electrostatic image thereon. The lens filter combination is assumed to be at unity (1:1) magnification.

In order to understand the problems involved in obtaining image plane uniformity in an optical system as shown in Figure 1, a more detailed discussion of the factors contributing to non-uniformity follows.

As previously mentioned, the most severe problem is the $\cos^4$ illumination falloff. Filters are known which provide compensation by having a maximum density at the center and having density decrease in accordance with the $\cos^4$ curve until 100% transmission is obtained at the edge of field. These filters are effective at short radial distances from the optical axis but their effectiveness decreases as the outer limits of field angle are approached. The reason for this is that the relative illumination in the image plane is governed by at least two other factors. These effects are shown in the following formula:

$$RI = T_\theta \frac{A_\theta}{A_A} \cos^4 \theta$$

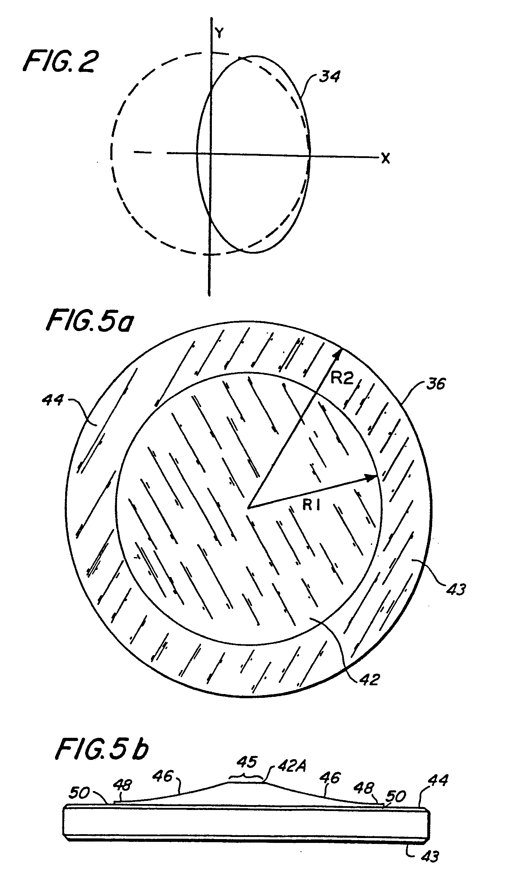

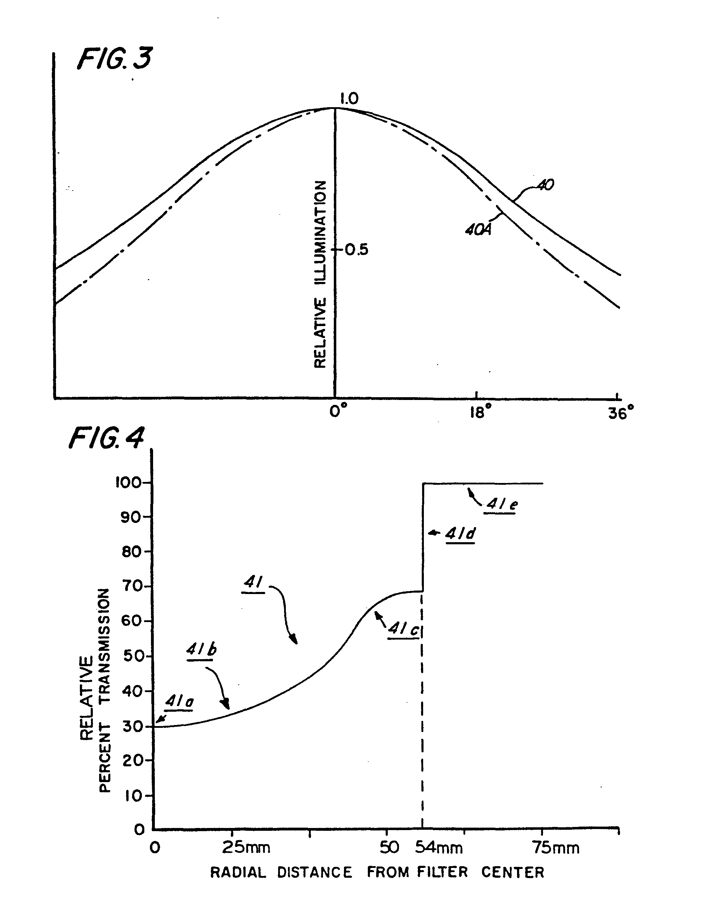

where $T_\theta$ is the transmission of the lens as a function of lens half angle $\theta$; $A_\theta$ is the area of the exit pupil at a given angle $\theta$ as projected onto the axial exit pupil plane: and $A_A$ is the area of the exit pupil on axis. The factor $A_\theta/A_A$ is referred to as the pupil distortion function. This effect is due to the effective change in shape and position of the exit pupil when viewed at various field angles through the lens elements between the lens aperture and the image plane. This pupil distortion is a function of the lens design and generally worsens with increasing field angle. Figure 2 shows the exit pupil of lens 34 of Figure 1 when viewed at two field positions on axis (dotted) and 36° in the +x direction (solid). Note that the center of the exit pupil has shifted towards the direction of view and the pupil has gone from a circular pupil to an ellipse with its minor axis coinciding with the x axis. The effect of this pupil distortion on lens transmission can be seen in the graph in Figure 3 which plots relative illumination at the image plane at a nominalized axial distance from the lens for the cases of $\cos^4$ falloff only (curve 40) and $\cos^4$ plus lens-introduced non-uniformities (curve 40A). The increasing difference between the curves at the outer field angles represents the additional decrease of illumination at the outer portions of a projected image. The filter of the present invention has been designed to provide compensation for these cumulative effects on image plane non-uniformity and a specific example is given in the following description:

A filter 36 was designed to provide the optical system of Figure 1 with an overall relative illumination variation of ±2% at the image plane. The optical system has the following characteristics:

Field angle range: 0° to 40°.
Lens 34: f/10, 150 mm focal length ×1 to ×0.647 magnification.
Lens exit pupil to image plane distance: 312 mm.
Filter 36 to exit pupil distance: 78 mm.

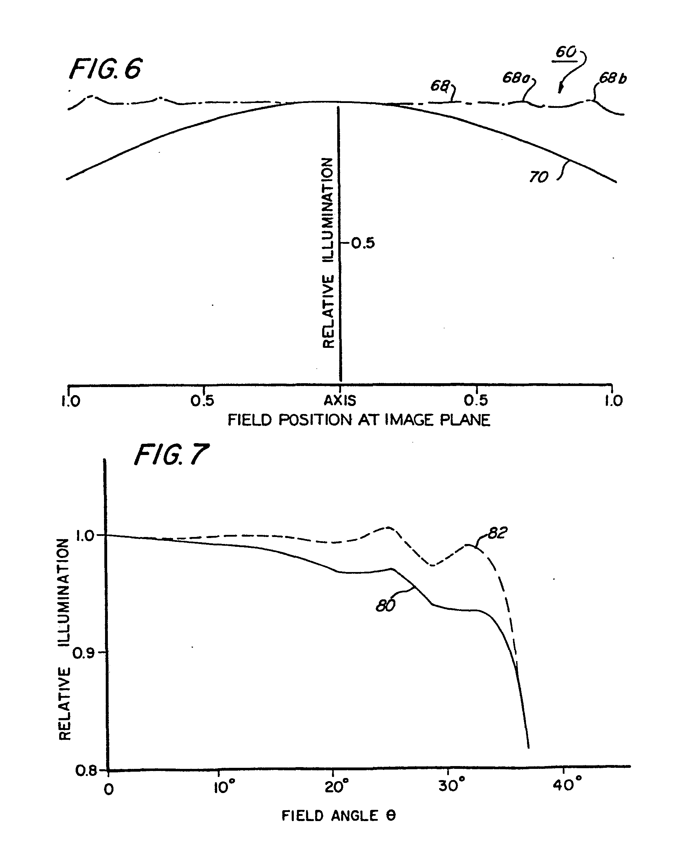

The relative illumination at the image plane is first determined in the absence of a filter and the filter design is then calculated by a trial and error iterative process. More specifically, a series of equations is derived which describes the lens exit pupil change at a number of field angle positions. Using these equations, light ray bundles which can pass through each area are calculated thus defining relative illumination at the image plane for these points. A given level of illumination is pre-defined at the desired uniform level. A filter transmission profile is constructed by an iterative process which consists of calculating optimum points for the filter to intercept the light bundles emerging from the respective pupil areas as well as optimum density to achieve the desired illumination level. From this process, several annular rings of varying density are defined for the filter which form the core of the transmission profile. An interpolation is then made between these transmission values to generate the complete filter profile shown in Figure 4.

Referring now to Figure 4, profile 41 can be characterized as generally increasing as radial distance from filter center increases but with portions of the profile having distinctive characteristics. Segment 41a at 30% transmission is relatively flat; segment 41b rises in slightly irregular fashion; segment 41c levels off and then rises abruptly at transition point 41d (radial distance $\approx$54 mm) to final segment 41e which is a flat segment representing 100% transmission to the outer edge of the filter. Note that the transmission values are normalized to the transmission of the filter substrate material so that the relative transmission of the substrate material becomes 100%.

Profile 41 is obtained by forming the filter shown in Figure 5a, 5b. Referring to these figures, filter 36 includes a transparent member such as a circular glass plate having a diameter of 150 mm. The plate has a central circular coated area 42 of radius Rl and is surrounded by transparent annular ring 44 within outer radius of R2. Coating 42 is a thin layer of nichrome which is formed by vacuum deposition on the surface of plate 43. The density of coating 42 is maximum in a central region 45, decreases through region 46, levels off in region 48 and ends abruptly at transition edge 50. The thickness of coating 42 will vary from hundreds of micrometers in central area 45 down to tens of micrometers in region 48.

In comparing the filter 36 of Figure 5 with the transmission profile 41 of Figure 4 it is evident that region 45, 46, 48, 50 and 44 correspond to segments 41a through 41d of profile 41 and to clear segment 41e respectively.

Figure 6 illustrates the improved relative illumination of the image plane using the above-described filter (curve 68) and as compared to a lens corrected only for cos⁴ dropoff (curve 70). The effect of profile areas 41a, 41b is to maintain uniform illumination up to segment 68a which corresponds to the flattening out of the transmission profile at segment 41c. At this point, the relative illumination rises, slightly representing an overcorrection. The next rise, representing a second overcorrection, is at transition segment 68b (corresponding to 41d of profile 41) where effective transmission sharply rises to 100%. Following this point, the relative illumination begins to drop even though the beam is being completely transmitted through clear glass since the effects of cos⁴ and lens distortion are even greater. The overcorrection segments are considered important elements of the invention since they maintain the relative illumination to within the desired $\pm$2%.

A particular advantageous feature of the invention is the abrupt termination of the coating 42 at transition point 50 (shown in Figure 5b). In vacuum deposition techniques wherein layers of metal such as nichrome and chrome are deposited on substrates, the requirements for increasing transmission require that the coating be made extremely thin, in the order of several micrometers. Such coatings are very difficult to achieve when making filters in production quantities. According to the present invention, the filter transmission near the coating edge 50 is kept relatively low keeping the coating material as thick as possible thereby making it easier to deposit the metal to the desired thickness.

Another problem is encountered in the fabrication of filters in production quantities. No matter what technique is used in mass producing filters (vaccum deposition, photographic, etc.) there will be some deviation from the desired filter transmission profile due to process variability. This will result in increased variation in the relative illumination at the image plane. Either extremely tight controls must be exercised in the production process (resulting in increased cost) or some method of accounting for these variations must be accomplished. According to another aspect of the invention, it was discovered that at least some of the illumination variation caused by these errors could be partially corrected by adjusting the position of the filter along the optical axis. For example, if filter 36 in Figure 1 were fabricated with the basic shape of the radial transmission curve correct but all of the transmission values $\approx$3% (absolute) high, and the filter were placed at the nominal design position (78 mm from lens exit pupil), the resultant illumination profile in the image plane (assuming perfect illumination in the object plane) would be as illustrated in Figure 7. There would be a resultant total (maximum) variation in illumination at the image plane of $\approx$9% as shown by plot 80. This can be partially compensated by adjusting the filter to a new position $\approx$2 mm farther from the lens exit pupil. This reduces the illumination variation to 6%, as shown by plot 82. Similarly, if the transmission of the filter is $\approx$3% low, a total illumination variation of $\approx$11% is reduced to around 3% by shifting the filter around 3 mm closer to the exit pupil. The curves shown represent a system designed for maximum field angle of 36°.

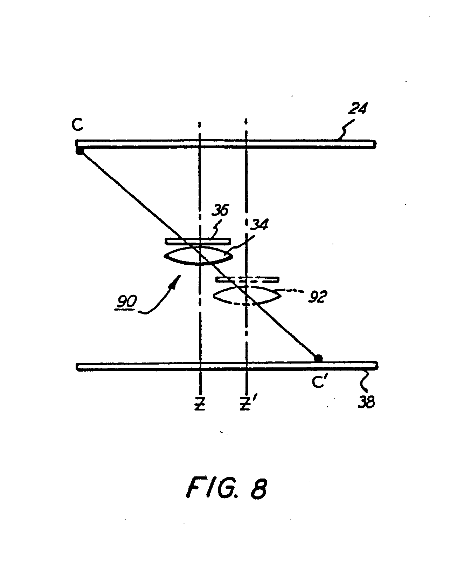

Figure 8 is a schematic view of lens 34 and filter 36 in a unity magnification and reduction position. It is assumed that the system shown in Figure 1 requires continuously variable optical magnification over a given range while maintaining a constant total optical conjugate. The system is also one in which documents are corner registered. Lens 34 is assumed to be a zoom lens whose focal length can be continuously varied. As shown in Figure 8, at position 90, the lens/filter assembly are at unity magnification with the center of each element lying on optical axis Z. When operating in a reduction mode, the assembly (by means not shown) is moved to position 92 to adjust the object and image conjugates with the focal length of lens 34 undergoing simultaneous changes to retain proper focusing. The center of the lens/filter assembly now lies on optical axis Z'. It is seen that the filter remains symmetrical with the changing lens optical axis during lens translation and therefore provides continuous and uniform compensation at all magnification positions while maintaining corner registration (C—C').

The above principles will be valid for situations requiring enlargement as well. For example, if a document is to be magnified at a 1.5× ratio, lens 34/filter 36 would be translated away from the photoreceptor to a new position (not shown) and the focal length adjusted accordingly.

Although the filter of the invention has been shown in connection with the specific embodiment of Figure 1, it may be practised in other environments. For example, alternate optical systems may change magnification by varying total conjugate: e.g. moving object and/or image planes, addition of folding mirrors. Edge, rather than corner registration, may be employed. While relatively uniform illumination of the object plane has been described, filter 36 could be designed to compensate for a non-uniform platen illumination provided the non-uniformity is circularly symmetric about the lens axis at all magnifications used. Although the filter has been shown mounted on the object side of the lens, it could also be mounted on the image side. Finally, although the description has described the use of the filter in relatively wide field angle situations where the illumination falloff problems are most severe, the filter is also suitable for use in systems having smaller field angle requirements.

## Claims

1. A full-frame, flash-exposure system for a copier, including:

an object plane (24) on which a document to be reproduced is to be supported;
a flash illumination source (39) for illuminating the object plane;
a lens (34) for projecting an image of said document onto an imaging plane (38), and
means for compensating for circularly-symmetrical exposure variations at the image plane, comprising a non-uniform transmission filter (36) mounted in a fixed relation to the lens and having its center on the lens's optical axis, said filter having a central circular area (42) of graded density which provides, for light passing therethrough, a radially-symmetrical light transmission profile which is minimum at the center and which increases with distance from the center,

characterised in that the filter provides exposure compensation at the image plane not only for the effect of $\cos^4$ variations, but also for transmission variations, vignetting and exit pupil distortion of the lens, and in that means are provided for moving the lens and filter *en bloc* to adjust the magnification of the optical system.

2. The system as claimed in claim 1, characterised in that the filter has a transparent annular area (43) defined by the outer edge of the central area and the outer edge of the filter, the transparent area providing maximum transmission of light therethrough.

3. The system as claimed in claim 1 or 2, characterised in that the density profile of said circular area flattens out at its outer edges causing it to have a transition point in its profile whereby transmission increases smoothly with radial distance to 100%.

4. The system as claimed in any preceding claim, characterised by the filter being mounted on the object side of the lens.

5. The system as claimed in any of claims 1—3 characterised by the filter being mounted on the image side of the lens.

6. In a full-frame, flash-exposure copier wherein a platen (24) is substantially uniformly flash illuminated and a lens (34) projects an image of a document placed on said platen onto an imaging plane (38), a method for correcting the system for both $\cos^4$ falloff and transmission variations, vignetting and exit pupil distortion, characterised by the steps of

a) determining relative illumination levels of an image projected onto an image plane at a plurality of field angles;
b) defining a filter transmission profile (41) which compensates for both $\cos^4$ falloff and the above circularly-symmetrical non-uniformities;
c) grading the density of the central circular portion (45) of a transparent filter so that the filter will have the required transmission profile, and
d) moving the lens and filter *en bloc* to adjust the magnification of the optical system.

## Patentansprüche

1. Vollbild-Blitzlicht-Belichtungsvorrichtung für ein Kopiergerät, mit

einer Objektebene (24), auf die ein zu reproduzierendes Original aufzulegen ist,
einer Blitzlicht-Beleuchtungsquelle (39) zum Beleuchten der Objektebene,

einer Linse (34) zum Projizieren eines Bildes des Originals auf eine Bildebene (38) und

Vorrichtungen zum Kompensieren zirkularsymmetrischer Belichtungsvariationen bei der Bildebene, die einen Filter (36) für ungleichmäßige Transmission aufweisen, der in einem festen Abstand zu der Linse befestigt ist, dessen Mitte auf der optischen Achse der Linse liegt und der einen zentralen, kreisförmigen Bereich (42) von abgestuftem Schwärzungsgrad aufweist, der für hindurchtretendes Licht ein radialsymmetrisches Lichttransmissionsprofil liefert, das im Zentrum minimal ist und mit dem Abstand vom Zentrum zunimmt,

dadurch gekennzeichnet, daß der Filter bei der Bildebene nicht nur eine Belichtungskompensation für den Effekt der cos$^4$-Variationen, sondern auch für Transmissionsvariationen, Vignettierung, Linsenverzeichnungen der Ausgangspupille liefert und daß Vorrichtungen zum gemeinsamen Bewegen der Linse und des Filters vorgesehen sind, um die Vergrößerung des optischen Systems einzustellen.

2. Vorrichtung nach Anspruch 1, dadurch gekennzeichnet, daß der Filter einen transparenten, ringförmigen Bereich (43) aufweist, der durch den Außenrand des zentralen Bereiches und durch den Außenrand des Filters begrenzt ist und für hindurchtretendes Licht eine maximale Transmission vorsieht.

3. Vorrichtung nach Anspruch 1 oder 2, dadurch gekennzeichnet, daß sich das Schwärzungsgrad-Profil des kreisförmigen Bereichs über einen Übergangspunkt in dem Profil ausbreitet, wodurch die Transmission mit radialer Entfernung in glattem Verlauf auf 100% ansteigt.

4. Vorrichtung nach einem der vorhergehenden Ansprüche, dadurch gekennzeichnet, daß der Filter auf der Objektseite der Linse befestigt ist.

5. Vorrichtung nach einem der Ansprüche 1 bis 3, dadurch gekennzeichnet, daß der Filter auf der Bildseite der Linse befestigt ist.

6. Verfahren, um bei einem Vollbild-Blitzlichtbelichtungs-Kopiergerät, bei dem eine Platte (24) im wesentlichen gleichförmig durch ein Blitzlicht beleuchtet ist und eine Linse (34) ein Bild eines auf dieser Platte angeordneten Originals auf eine Bildplatte (38) projiziert, bei dieser Vorrichtung sowohl die cos$^4$-Abweichungen als auch Transmissionsvariationen, Vignettierung und Verzerrungen der Ausgangspupille zu korrigieren, gekennzeichnet durch folgende Schritte:

a) Bestimmen der relativen Beleuchtungspegel eines auf eine Bildebene projizierten Bildes unter einer Mehrzahl von Feldwinkeln,

b) Festlegen eines Filter-Transmissionsprofils (41), das sowohl die cos$^4$-Abweichung als auch die genannten zirkularsymmetrischen Ungleichmäßigkeiten kompensiert,

c) Abstufen des Schwärzungsgrades des zentralen, kreisförmigen Bereiches (45) eines transparenten Filters, so daß der Filter das geforderte Transmissionsprofil bekommt, und

d) gemeinsames Bewegen der Linse und des Filters zum Einstellen der Vergrößerung des optischen Systems.

**Revendications**

1. Dispositif d'exposition par éclairs du type "grandeur naturelle" équipant un appareil de reproduction et comportant:

— un plan-objet (24) sur lequel un document à reproduire est supporté;
— une source (39) d'éclairage par éclairs pour éclairer le plan-objet;
— une lentille (34) pour projeter une image du document sur un plan-image (38'); et
— un moyen pour compenser des variations d'exposition à symétrie circulaire sur le plan-image, comprenant un filtre (36) à transmission non uniforme occupant une position fixe par rapport à la lentille et dont le centre se trouve sur l'axe optique de cette lentille, ce filtre présentant une région centrale circulaire (42) à densité échelonnée qui provoque, pour la lumière la traversant, un profil de transmission de lumière radialement symétrique qui accuse un minimum au centre et augmente avec la distance par rapport à ce centre,

dispositif caractérisé en ce que le filtre produit sur le plan-image une compensation de l'exposition, non seulement pour l'effet résultant des variations du cos$^4$, mais également pour des variations de transmission, l'effet de masque et la déformation de la pupille d'émergence de la lentille et en ce que des moyens sont prévus pour déplacer d'un seul tenant la lentille et le filtre en vue d'ajuster le grossissement du système optique.

2. Dispositif selon la revendication 1, caractérisé en ce que le filtre possède une zone annulaire transparente (43) délimitée par le bord externe de la zone centrale et le bord extérieur du filtre, cette zone transparente permettant une transmission maximale de la lumière la traversant.

3. Dispositif selon l'une des revendications 1 et 2, caractérisé en ce que le profil de la courbe de densité de la zone circulaire s'aplatit sur ses bords externes, l'obligeant à présenter, dans son profil, un point de transition auquel la transmission augmente régulièrement avec la distance radiale jusqu'à atteindre 100%.

4. Dispositif selon l'une quelconque des revendications 1 à 3, caractérisé en ce que le filtre est monté du côté objet de la lentille.

5. Dispositif selon l'une quelconque des revendications 1 à 3, caractérisé en ce que le filtre est monté du côté image de la lentille.

6. Procédé utilisé dans une machine de

**0 033 185**

reproduction à exposition par éclairs du type "grandeur naturelle" dans laquelle une platine (24) est éclairée d'une manière sensiblement uniforme par des éclairs et une lentille (34) projette, sur un plan-image (38), une image d'un document déposé sur la platine, procédé destiné à corriger le système à la fois pour la baisse proportionnelle au $\cos^4$ et pour des variations dans la transmission, l'effet de masque et la déformation de la pupille d'émergence, procédé caractérisé par les étapes consistant:

a) à déterminer des niveaux d'éclairage relatif d'une image projetée sur un plan-image à plusieurs angles de champ;

b) à définir un profil ou courbe (41) de transmission du filtre qui compense à la fois la baisse proportionnelle au $\cos^4$ et les défauts d'uniformité à symétrie circulaire susmentionnés;

c) à échelonner la densité de la zone centrale circulaire (45) d'un filtre transparent, de façon que ce filtre présente le profil de transmission nécessaire; et

d) à déplacer d'un seul tenant la lentille et le filtre en vue d'ajuster le grossissement du système optique.

FIG. 1

FIG.2

FIG.5a

FIG.5b

FIG. 3

FIG. 4

FIG. 6

RELATIVE ILLUMINATION

—0.5

1.0    0.5    AXIS    0.5    1.0

FIELD POSITION AT IMAGE PLANE

FIG. 7

RELATIVE ILLUMINATION

1.0

0.9

0.8

0    10°    20°    30°    40°

FIELD ANGLE θ

4

FIG. 8